# EUROPÄISCHE PATENTANMELDUNG

(11) **EP 4 563 725 A1**
(43) Veröffentlichungstag der Anmeldung: **04.06.2025**
(21) Anmeldenummer: 23020528.8
(22) Anmeldetag: 29.11.2023
(51) Int. Cl.: C25B 1/04, C25B 15/02, C25B 15/08

(54) **VERFAHREN UND ANLAGE ZUR HERSTELLUNG EINES SYNTHESEPRODUKTS**

(71) Anmelder: Linde GmbH, 82049 Pullach (DE)
(72) Erfinder: Schwarzhuber, Josef, 82049 Pullach (DE); Reinke, Michael, 82049 Pullach (DE)
(74) Vertreter: Fischer, Werner

(57) **Zusammenfassung**

Es wird ein Verfahren (100) zur Herstellung eines Syntheseprodukts (6) vorgeschlagen, bei dem gasförmiger Wasserstoff (3) durch Elektrolyse (10) von Wasser (1) bereitgestellt und mit einem oder mehreren gasförmigen Reaktionspartnern (4) einer Umsetzung (30) zu dem Syntheseprodukt (6) unterworfen wird, wobei während eines ersten Verfahrensmodus der Wasserstoff (3) und der eine oder die mehreren Reaktionspartner (4) unter Erhalt eines Reaktionsgemischs (5) vermischt werden und das Reaktionsgemisch (5) oder ein Teil hiervon in einer Speichereinheit (20) druckgespeichert wird, und wobei während eines zweiten Verfahrensmodus das in dem ersten Verfahrensmodus druckgespeicherte Reaktionsgemisch (5) oder ein Teil hiervon aus der Speichereinheit (20) entnommen und der Umsetzung (30) zu dem Syntheseprodukt (6) zugeführt wird. Eine entsprechende Anlage wird ebenfalls vorgeschlagen.

## Beschreibung

Die Erfindung betrifft ein Verfahren und eine Anlage zur Herstellung eines Syntheseprodukts, beispielsweise von Ammoniak, synthetischem Methan oder Methanol.

### Hintergrund

Bei der Produktion von Syntheseprodukten auf Basis von Wasserstoff, wie beispielsweise von Ammoniak aus Wasserstoff und Stickstoff, von synthetischem Methan (engl. Synthetic Natural Gas, SNG) oder Methanol aus Wasserstoff und Kohlenmonoxid/-dioxid, muss Wasserstoff bereitgestellt werden. Zur Herstellung von Wasserstoff werden herkömmlicherweise kohlen(wasser)stoffhaltige Einsatzstoffe z.B. mittels Dampfreformierung, partieller Oxidation, autothermer Reformierung oder einer Kombination dieser Verfahren umgesetzt. Bei den genannten Verfahren fällt Kohlendioxid an, das beispielsweise mittels einer bekannten chemischen oder physikalischen Wäsche oder mittels Druckwechseladsorption aus einem Produktgemisch der genannten Verfahren abgetrennt wird.

Falls das abgetrennte Kohlendioxid nicht in einem nachfolgenden Prozess, wie beispielsweise zur Produktion der genannten Verbindungen, benötigt wird, wird es herkömmlicherweise an die Atmosphäre abgegeben. In diesem Fall spricht man auch von sogenannten grauen Produkten, d.h. grauem Wasserstoff, grauem Ammoniak, grauem synthetischem Methan, grauem Methanol und dergleichen.

Neuerdings gewinnt die Gewinnung von sogenannten blauen Produkten an Bedeutung. Hierbei wird angestrebt, durch geeignete Verfahrensschritte die Freisetzung von Kohlendioxid an die Atmosphäre so weit wie möglich zu vermeiden. Nach seiner Abtrennung wird das Kohlendioxid hierzu typischerweise verdichtet, aufgereinigt und anschließend verflüssigt, bevor es beispielsweise in einer Lagerstätte endgelagert wird. Dies wird auch als Sequestrierung bezeichnet.

Auch Verfahren zur Gewinnung von sog. grünem Wasserstoff und entsprechenden Syntheseprodukten werden zunehmend eingesetzt. Sie unterscheidet sich von den vorstehend genannten Verfahren insbesondere dadurch, dass von Anfang an die Bildung von Kohlendioxid vermieden wird. Dazu kann Wasserstoff insbesondere durch Elektrolyse von Wasser unter Einsatz von regenerativ erzeugtem Strom erfolgen, wobei "regenerativ erzeugter Strom" hier als Kurzbezeichnung für elektrischen Strom steht, der mittels geeigneter erneuerbarer Energieträger wie beispielsweise Wind, Sonne und/oder Wasser erzeugt wird.

Bekanntermaßen ist die regenerative Erzeugung von Strom Preis- und Verfügbarkeitsschwankungen unterworfen, die sich durch die jeweils genutzten Energieträger ergeben. Daher wird angestrebt, den Energiebedarf von Verfahren zur Herstellung von Syntheseprodukten an die Verfügbarkeit des Stroms anzupassen. Bei der Herstellung von Syntheseprodukten aus Wasserstoff, der durch Elektrolyse von Wasser mit regenerativ erzeugtem Strom erzeugt wird, kann der Wasserstoff während Phasen hoher Stromverfügbarkeit zwischengespeichert und während anderer Phasen für die Gewinnung der Syntheseprodukte genutzt werden.

Es besteht der Bedarf nach Verfahren zur Herstellung von Syntheseprodukten, die Nachteile bekannter Verfahren zumindest teilweise überwinden.

### Überblick

Es werden ein Verfahren und eine Anlage mit den Merkmalen der unabhängigen Ansprüche vorgeschlagen. Ausgestaltungen sind Gegenstand der abhängigen Ansprüche und der nachfolgenden Beschreibung.

Das vorgeschlagene Verfahren zur Herstellung eines Syntheseprodukts umfasst, dass gasförmiger Wasserstoff durch Elektrolyse von Wasser bereitgestellt und mit einem oder mehreren gasförmigen Reaktionspartnern einer Umsetzung zu dem Syntheseprodukt unterworfen wird.

Es ist vorgesehen, dass während eines ersten Verfahrensmodus der Wasserstoff und der eine oder die mehreren Reaktionspartner unter Erhalt eines Reaktionsgemischs vermischt werden und das Reaktionsgemisch oder ein Teil hiervon in einer Speichereinheit druckgespeichert wird, und dass während eines zweiten Verfahrensmodus das in dem ersten Verfahrensmodus druckgespeicherte Reaktionsgemisch oder ein Teil hiervon aus der Speichereinheit entnommen und der Umsetzung zu dem Syntheseprodukt zugeführt wird.

Aus dem Stand der Technik ist es bekannt bei der Herstellung von Syntheseprodukten unter Verwendung von Wasserstoff, der mittels regenerativ erzeugtem Strom durch Elektrolyse bereitgestellt wird, Wasserstoff zwischenzuspeichern, um ihn zur Überbrückung von Wind- bzw. Sonnen-"Flauten" einzusetzten und eine kontinuierliche Bereitstellung der Syntheseprodukte zu gewährleisten.

Hier vorgeschlagene Ausgestaltungen beruhen auf der überraschenden Erkenntnis, dass anstelle einer Zwischenspeicherung von Wasserstoff trotz des dabei zu erwartenden größeren Speichervolumens eine Speicherung eines Reaktionsgemischs, beispielsweise aus drei Molanteilen Wasserstoff und einem Molanteil Stickstoff im Falle der Ammoniaksynthese, vorteilhaft ist.

Um den Wasserstoff aus einer Elektrolyse als hochreinen Wasserstoff zwischenzuspeichern, wird in herkömmlichen Verfahren ein separater Wasserstoffverdichter benötigt, der in Phasen hoher Stromverfügbarkeit Wasserstoff in eine Speichereinheit verdichtet. In Abhängigkeit vom Wasserstoffüberangebots wird der Wasserstoffverdichter dabei meist nur in Teillast und selten am optimalen Arbeitspunkt betrieben, zudem erfordert die Art des Verdichters (Kolbenverdichter) eine Redundanz, um den Wasserstoffpuffer zu befüllen.

Wird anstatt Wasserstoff bereits ein geeignetes Reaktionsgemisch zwischengespeichert, kann beispielsweise für die Ammoniaksynthese der bereits existierende Synthesegasverdichter verwendet werden. Es wird kein zusätzliches Equipment für den Betrieb des "Synthesegasspeichers" benötigt, was zu niedrigeren Investitionskosten führt. Da der Synthesegasverdichter sowohl für die Ammoniaksynthese als auch für das Befüllen des Synthesegasspeichers verwendet wird, wird dieser häufiger am optimalen Betriebspunkt betrieben und hat somit geringere Betriebskosten. Entsprechendes gilt auch für andere Verfahrensprodukte.

Die Erfindung sieht als vor, einen bereits existierenden, für die Komprimierung eines Reaktionsgemischs eingesetzten Verdichter, wie beispielsweise einen Ammoniaksynthesegasverdichter, zur Befüllung einer Speichereinheit zu verwenden, so dass keine zusätzlichen Investitionskosten anfallen. Da ein entsprechender Verdichter, hier auch als "Verdichtereinheit" bezeichnet, sowohl zum Befüllen der Speichereinheit als auch für die Beschickung des jeweils im Verfahren eingesetzten Synthesereaktors verwendet wird, wird der Verdichter häufiger an seinem optimalen Betriebspunkt betrieben, was zu Einsparungen bei den Betriebskosten führt.

In bestimmten Ausgestaltungen kann in einem dritten Verfahrensmodus der gasförmige Wasserstoff durch die Elektrolyse von Wasser bereitgestellt und mit dem einen oder den mehreren gasförmigen Reaktionspartnern einer Umsetzung zu dem Syntheseprodukt unterworfen werden, wobei der Wasserstoff und der eine oder die mehreren Reaktionspartner unter Erhalt des Reaktionsgemischs vermischt werden und das Reaktionsgemisch oder ein Teil hiervon unter Umgehung der Speichereinheit der Umsetzung zu dem Syntheseprodukt zugeführt wird. Dieser Betriebsmodus kann insbesondere dann durchgeführt werden, wenn die Speichereinheit befüllt ist und elektrische Energie zur Bereitstellung des Wasserstoffs weiter zur Verfügung steht.

In bestimmten Ausgestaltungen kann in dem ersten Verfahrensmodus das Reaktionsgemisch oder dessen zwischengespeicherter Teil vor der Zwischenspeicherung auf ein Speicherdruckniveau verdichtet werden, und in dem zweiten Verfahrensmodus kann das in dem ersten Verfahrensmodus zwischengespeicherte Reaktionsgemisch auf dem Speicherdruckniveau der Speichereinheit entnommen und auf ein Umsetzungsdruckniveau verdichtet werden, bevor er der Umsetzung zu dem Syntheseprodukt zugeführt wird. Das Umsetzungsdruckniveau liegt dabei oberhalb des Speicherdruckniveaus. Es wird alo auch in dem zweiten Verfahrensmodus eine Verdichtung vorgenommen, so dass die Verdichtereinheit entsprechend ausgelastet ist und die Speicherung auf einem Druckniveau unterhalb des Umsetzungsdruckniveau erfolgen kann. Letzteres erlaubt eine einfachere bauliche Realisierung der Speichereinheit mit insbesondere geringeren Materialkosten.

In bestimmten Ausgestaltungen kann die Verdichtung auf das Speicherdruckniveau und das Umsetzungsdruckniveau unter Verwendung einer mehrstufigen Verdichtereinheit vorgenommen werden, die entsprechende Entnahme- und Rückführmöglichkeiten für Stoffströme und eine hohe Flexibilität bietet.

In bestimmten Ausgestaltungen kann in dem ersten Verfahrensmodus das Reaktionsgemisch oder dessen druckgespeicherter Teil der Verdichtereinheit saugseitig zugeführt und über eine Zwischenentnahme auf dem Speicherdruckniveau entnommen werden, und in dem zweiten Verfahrensmodus kann das in dem ersten Verfahrensmodus druckgespeicherte Reaktionsgemisch der Verdichtereinheit saugseitig zugeführt und druckseitig auf dem Umsetzungsdruckniveau entnommen werden. Auf diese Weise kann ein entsprechendes Reaktionsgemisch einfach auf unterschiedlichen Druckniveaus bereitgestellt werden.

In bestimmten Ausgestaltungen kann das Speicherdruckniveau bei 135 bis 145 bar, beispielsweise ca. 140 bar, und das Umsetzungsdruckniveau bei 145 bis 155 bar, beispielsweise ca. 150 bar, liegen. Das Speicherdruckniveau kann auch bei 30 bis 210 bar, insbesondere 70 und 150 bar, und das Umsetzungsdruckniveau bei 100 bis 250 bar, insbesondere zwischen 115 und 180 bar, liegen. Generell unterscheiden sich das Speicher- und das Umsetzungsdruckniveau um mindestens 5 bar. Insbesondere im Fall der Ammoniaksynthese kann das Umsetzungsdruckniveau 5 bis 15, 8 bis 12, 9 bis 11 oder ca. 10 bar oberhalb des Speicherdruckniveaus liegen. Allgemein kann das Speicherdruckniveau zwischen einem Saugdruck der Verdichtereinheit und einem Zwischendruck liegen, auf dem eine Entnahme erfolgt. Bei einem Kolbenverdichter kann das Umsetzungsdruckniveau bei 200 bar und mehr liegen.

In bestimmten Ausgestaltungen können im Synthesereaktor nicht umgesetzte Bestandteile des Reaktionsgemsiches als Rückführstrom der Verdichtereinheit über eine Zwischeneinspeisung wieder zugeführt werden. Dies ist beispielsweise bei der Ammoniaksynthese der Fall, wobei es sich bei dem Rückführstrom um im Synthesereaktor nicht umgesetzten Wasserstoff und/oder Stickstoff handelt.

Bevorzugt umfasst die Verdichtereinheit einen Radial- und/oder einen Axialturboverdichter und/oder einen Kolbenverdichter. In bestimmten Ausgestaltungen kann die Verdichtereinheit eine Radialverdichtereinheit sein und vier Verdichterstufen aufweisen, wobei die Zwischenentnahme zwischen der von der Saugseite aus gesehen dritten und vierten Verdichterstufe vorgesehen sein kann. In einer entsprechenden Ausgestaltung lassen sich insbesondere die unterschiedlichen Druckniveaus besonders einfach realisieren.

In bestimmten Ausgestaltungen kann die Vermischung zu dem Reaktionsgemisch unter Verwendung einer Mischtrommel vorgenommen und/oder unter Verwendung einer saugseitig der Verdichtereinheit angeordneten Dichtemesseinheit überwacht werden. Auf diese Weise kann stets ein sicherer Betrieb der Verdichtereinheit und der Umsetzung zu dem Verfahrensprodukt sichergestellt werden.

In bestimmten Ausgestaltungen kann die Elektrolyse unter Verwendung von regenerativ erzeugtem elektrischem Strom durchgeführt werden. Zu den Vorteilen eines Einsatzes der hier vorgeschlagenen Ausgestaltungen sei auf die obigen Erläuterungen ausdrücklich verwiesen.

In bestimmten Ausgestaltungen kann der erste Betriebsmodus während eines Zeitraums höherer Stromverfügbarkeit durchgeführt werden und der zweite Betriebsmodus kann während eines Zeitraums geringerer Stromverfügbarkeit durchgeführt werden. Der erste Betriebsmodus kann auch während eines Zeitraums geringerer Stromkosten durchgeführt werden und der zweite Betriebsmodus kann während eines Zeitraums höherer Stromkosten. Auf diese Weise lassen sich Ressourcen schonen und Produktionskosten minimieren.

In bestimmten Ausgestaltungen kann das Syntheseprodukt Ammoniak und der Reaktionspartner des Wasserstoffs Stickstoff sein. Ausgestaltungen des Verfahrens eignen sich aber auch für Fälle, in denen das Syntheseprodukt synthetisches Methan oder Methanol ist und der oder die Reaktionspartner Kohlendioxid und/oder Kohlenmonoxid ist oder sind. Bei der Methanolsynthese enthält das Reaktionsgemisch beispielsweise einen Molanteil Kohlenmonoxid und zwei Molanteile Wasserstoffgas oder einen Molanteil Kohlendioxid und drei Molanteile Wasserstoffgas oder Kombinationen davon. Bei der Synthese von synthetischem Methan enthält das Reaktionsgemisch beispielsweise einen Molanteil Kohlenmonoxid und drei Molanteile Wasserstoffgas oder einen Molanteil Kohlendioxid und vier Molanteile Wasserstoffgas oder Kombinationen davon.

Die vorgeschlagene Anlage zur Herstellung eines Syntheseprodukts ist dafür eingerichtet, gasförmigen Wasserstoff durch Elektrolyse von Wasser bereitzustellen und mit einem oder mehreren gasförmigen Reaktionspartnern einer Umsetzung zu dem Syntheseprodukt zu unterwerfen.

Die vorgeschlagene Anlage ist ferner dazu eingerichtet, während eines ersten Verfahrensmodus den Wasserstoff und den einen oder die mehreren Reaktionspartner unter Erhalt eines Reaktionsgemischs zu vermischen und das Reaktionsgemisch oder ein Teil hiervon in einer Speichereinheit druckzuspeichern, und während eines zweiten Verfahrensmodus das in dem ersten Verfahrensmodus druckgespeicherte Reaktionsgemisch oder einen Teil hiervon aus der Speichereinheit zu entnehmen und einem Synthesereaktor zu Umsetzung zu dem Syntheseprodukt zuzuführen.

Zu weiteren Merkmalen und Vorteilen einer entsprechenden Anlage und Ausgestaltungen hiervon sei auf die obigen Erläuterungen betreffend das erfindungsgemäß vorgeschlagenen Verfahrens und seinen Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Zeichnungen

Ausführungsformen der Erfindung werden nachfolgend rein beispielhaft unter Bezugnahme auf die beigefügten Zeichnungen beschrieben, wobei
Figur 1 ein Verfahren gemäß einer Ausgestaltung in einem ersten Verfahrensmodus schematisch veranschaulicht, und
Figur 2 das Verfahren gemäß Figur 1 in in einem zweiten Verfahrensmodus schematisch veranschaulicht.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorliegende Erfindung und Ausgestaltungen hiervon werden nachfolgend unter Bezugnahme auf eine Elektrolyse mit Protonenaustauschmembran erläutert. Wie mehrfach angesprochen, ist die Erfindung jedoch nicht hierauf beschränkt. Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

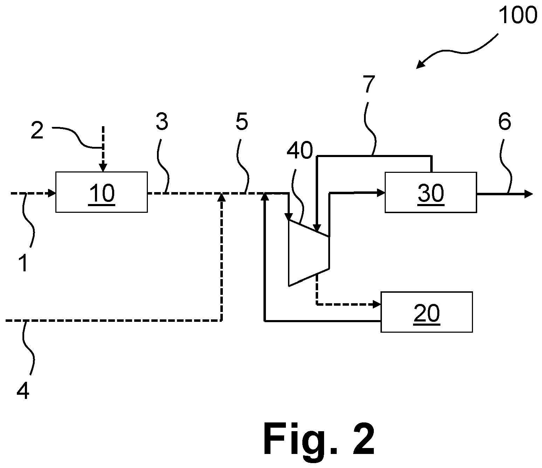

Verfahren zur Herstellung von Wasserstoff sind vielfach in der Literatur beschrieben. Statt vieler sei beispielsweise auf den Artikel von A.O. Oni et al., "Comparative assessment of blue hydrogen from steam methane reforming, autothermal reforming, and natural gas decomposition technologies for natural gas-producing regions", Energy Conversion and Management 254 (2022) 115245, verwiesen, der in den Figuren 2 bis 4 solche Verfahren zeigt und in den jeweils zugehörigen Textpassagen beschreibt.

Die Herstellung von Wasserstoff mittels Wasserelektrolyse ist ebenfalls hinreichend bekannt und beispielsweise in dem Artikel "Hydrogen" in Ullmann's Encyclopedia of Industrial Chemistry, Wiley-VCH, 15. Juni 2000, DOI: 10.1002/14356007.a13_297, insbesondere in Abschnitt 4.2, "Electrolysis", beschrieben.

Bei der klassischen Wasserelektrolyse wird eine wässrige alkalische Lösung, typischerweise von Kaliumhydroxid, als Elektrolyt verwendet (AEL, Alkalische Elektrolyse). Die Elektrolyse mit einer uni- oder bipolaren Elektrodenanordnung erfolgt dabei bei Atmosphärendruck oder im industriellen Maßstab auch deutlich darüber. Neuere Entwicklungen bei der Wasserelektrolyse umfassen die Verwendung von protonenleitenden lonenaustauschmembranen (SPE, Solid Polymer Electrolysis; PEM, Proton Exchange Membranes), bei der das zu elektrolysierende Wasser an der Anodenseite bereitgestellt wird. Auch die Elektrolyse unter Verwendung von Anionenaustauschermembranen (AEM, Anion Exchange Membrane) ist bekannt.

Die bisher genannten Verfahren der Wasserelektrolyse zählen zu den Niedertemperaturverfahren, bei denen das zu elektrolysierende Wasser in der Flüssigphase vorliegt. Daneben wird auch die sogenannte Dampfelektrolyse eingesetzt, die ebenfalls mit alkalischen Elektrolyten (also als AEL) mit angepassten Membranen, beispielsweise Polysulfonmembranen, sowie unter Verwendung von Festoxidelektrolysezellen (SOEC, Solid Oxide Electrolysis Cells) durchgeführt werden können. Letztere umfassen insbesondere dotiertes Zirkondioxid oder Oxide anderer seltener Erden, die bei hohen Temperaturen leitfähiger werden.

Der Begriff der Elektrolyse soll nachfolgend sämtliche dieser Verfahren umfassen. Insbesondere die Niedertemperaturelektrolyse (PEM, AEL, AEM) eignet sich für einen flexiblen Betrieb, der den Energieübergang zu erneuerbaren Energien unterstützt. Sämtliche Verfahren können in den hier vorgeschlagenen Verfahren und entsprechenden Ausgestaltungen eingesetzt werden.

Die Ammoniakproduktion ist vielerorts, beispielsweise bei M. Appl, "Ammonia: Principles and Industrial Practice", Wiley-VCH, 1999, beschrieben. Es werden typischerweise Varianten des Haber-Bosch-Verfahrens eingesetzt. Der dabei produzierte Ammoniak wird typischerweise bei atmosphärischem Druck und einer Temperatur von -33°C gelagert. Um den Ammoniak bei diesen Bedingungen als flüssiges Produkt zu generieren, kommt typischerweise eine Kälteanlage zur Kondensation als auch zur Aufreinigung des Ammoniakes zum Einsatz.

Ein "Verdichter" oder eine "Verdichtereinheit" ist im hier zugrunde gelegten Verständnis eine Vorrichtung, die zum Verdichten wenigstens eines gasförmigen Stroms von wenigstens einem Eingangsdruck, bei dem dieser dem Verdichter oder der Verdichtereinheit zugeführt wird, auf wenigstens einen Enddruck, bei dem dieser dem Verdichter oder der Verdichtereinheit entnommen wird, eingerichtet ist.

Ein Verdichter oder eine Verdichtereinheit kann eine integrierte bauliche Einheit bilden, die jedoch mehrere "Verdichterstufen" in Form von Kolben-, Schrauben- und/oder Schaufelrad- bzw. Turbinenanordnungen (also Axial- oder Radialverdichterstufen) aufweisen kann. Insbesondere werden entsprechende Verdichterstufen mittels eines gemeinsamen Antriebs, beispielsweise über eine gemeinsame Welle oder über mittels Getrieben verbundenen mehreren Wellen, und beispielsweise mittels eines Elektromotors angetrieben.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann. Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff) ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 5, 1, 0,1 oder 0,01% dieser Komponenten in Summe oder als Einzelwerte enthält.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

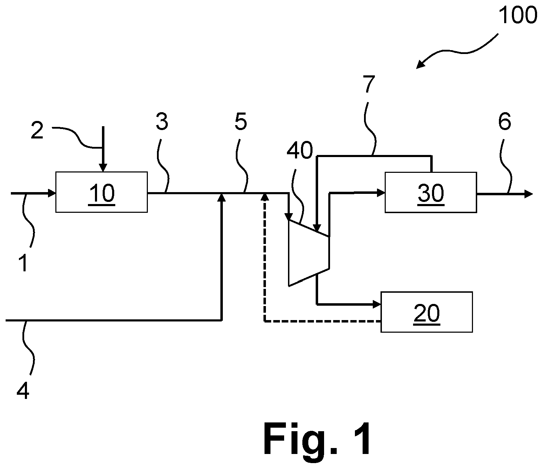

In den Figuren 1 und 2 ist ein Verfahren gemäß einer Ausgestaltung veranschaulicht und insgesamt mit 100 bezeichnet, wobei Figur 1 einen ersten Verfahrensmodus bei hohem Stromangebot, beispielsweise durch hohes Windaufkommen, und Figur 2 einen zweiten Verfahrensmodus bei geringem Stromangebot, beispielsweise bei einer Wind-Flaute, veranschaulicht. Jeweils gebildete Stoffströme sind mit durchgezogenen Strompfeilen, nicht gebildete Stoffströme mit gepunkteten Strompfeilen dargestellt. Auch Zwischenmodi können generell auftreten, beispielsweise kann die Elektrolyse nur 5% des benötigten Wasserstoffs einer Ammoniaksynthese produzieren und der Rest aus dem verwendeten Pufferspeicher (siehe unten) entnommen werden, falls die Ammoniaksynthese als Minimalwert 10% benötigt.

Das Verfahren der Figuren 1 und 2 wird anhand einer Ammoniaksynthese veranschaulicht, wobei andere Ausgestaltungen aber auch zur Herstellung von anderen Syntheseprodukten verwendet werden können. Die Grundkonzepte sind dabei dieselben oder im Wesentlichen dieselben, wobei für andere Syntheseprodukte an die Stelle von Stickstoff beispielsweise Kohlendioxid und/oder Kohlenmonoxid (im Fall der Methan- oder Methanolsynthese) tritt und eine Umsetzung 30 in anderer, aber an sich bekannter, Form erfolgt.

Teil des Verfahrens 100 ist eine Elektrolyse 10 beliebiger Art, dem Wasser in Form eines Wasserstroms 1 zugeführt wird. Das Wasser wird in dem ersten Verfahrensmodus gemäß Figur 1 mittels der Elektrolyse 10 unter Einsatz von insbesondere aus regenerierbaren Quellen bezogenem ektrischen Strom 2 unter Bildung von Wasserstoff und Sauerstoff zerlegt. Der Wasserstoff kann mittels einer nicht dargestellten katalytischen Sauerstoffumsetzungseinheit (sogenannte DeOxo) unter Bildung von Wasser von Restsauerstoff befreit und der Wasserstoff nach Abscheidung des gebildeten Wassers beispielsweise mittels adsorptiver Verfahren weiter getrocknet werden. Typischerweise vebraucht die Elektrolyse 10 ca. 90% oder mehr der gesamten verbrauchten elektrischen Energie der Anlage.

Es wird ein im Wesentlichen trockener Wasserstoffstrom 3 erhalten. Die Menge dieses Wasserstoffs übersteigt dabei typischerweise den für die Bildung des Syntheseprodukts 6 benötigten Mindestbedarf. Der nicht dargestellte Sauerstoff kann anderweitig verwendet oder abgeblasen werden.

In dem zweiten Verfahrensmodus gemäß Figur 2 ist die Elektrolyse 10 aufgrund des geringeren Stromangebots nicht in Betrieb und liefert daher keinen Wasserstoffstrom 3 oder diesen nur in einer Menge, die unterhalb des für die Bildung des Syntheseprodukts 6 erforderlichen Mindestbedarfs liegt.

Parallel zur Bildung des Wasserstoffstroms 3 in dem ersten Verfahrensmodus gemäß Figur 1 wird, beispielsweise mittels kryogener Luftzerlegung oder anderer Verfahren, ein Stickstoffstrom 4 bereitgestellt. Dies erfolgt in dem zweiten Verfahrensmodus gemäß Figur 2 typischerweise nicht.

Der Wasserstoffstrom 3 und der Stickstoffstrom 4 werden, beispielsweise unter Verwendung einer nicht dargestellten Mischtrommel, in dem ersten Verfahrensmodus gemäß Figur 1 in einem Verhältnis von drei zu eins (mol/mol) miteinander vermischt, wobei eine Mischkontrolle unter Verwendung einer nicht dargestellten Dichtemesseinheit vorgenommen werden kann.

Ein auf diese Weise gebildetes Reaktionsgemisch 5 wird in dem ersten Verfahrensmodus gemäß Figur 1 mittels einer Verdichtereinheit 40, beispielsweise einem vierstufigen Zentrifugalverdichter, saugseitig zugeführt. Ein erster Anteil des Reaktionsgemischs 5 wird der Verdichtereinheit 40 über eine Zwischenentnahme entnommen, beispielsweise zwischen der von der Saugseite aus gesehenen dritten und vierten Verdichterstufe, und in einer Speichereinheit 20 mit beispielsweise mehren Speicherbehältern zwischengespeichert. Dies erfolgt auf einem als Speicherdruckniveau bezeichneten Druckniveau. Ein zweiter Anteil des Reaktionsgemischs 5 wird der Verdicherteinheit druckseitig entnommen und einer Umsetzung 30 zu dem gewünschten Verfahrensprodukt 6, hier Ammoniak, zugeführt. Dies erfolgt auf einem als Umsetzungsdruckniveau bezeichneten Druckniveau.

In dem zweiten Verfahrensmodus gemäß Figur 2 wird der zuvor in dem ersten Verfahrensmodus zwischengespeicherte erste Anteil des Reaktionsgemischs 5 der Speichereinheit entnommen und saugseitig der Verdichtereinheit 40 zugeführt. Dies erfolgt auf dem Speicherdruckniveau. Der erste Anteil des Reaktionsgemischs 5 wird sodann in der Verdichtereinheit auf das Umsetzungsdruckniveau verdichtet und sodann der Umsetzung 30 zu dem gewünschten Verfahrensprodukt 6 zugeführt.

Einige zentrale Aspekte von Ausgestaltungen der Erfindung werden nachfolgend nochmals mit anderen Worten erläutert.

Wasserstoff 3 aus einer DeOxo- und Trocknungseinheit, die einer Elektrolyse 10 nachgeschaltet und hier nicht veranschaulicht ist, und Stickstoff 4 aus einer geeigneten Anlage, beispielsweise einer Luftzerlegungsanlage, werden in dem ersten Verfahrensmodus gemäß Figur 1 unter Erhalt eines Reaktionsgemischs 5 in einem Verhältnis von drei zu eins (mol/mol) gemischt, wobei eine Mischtrommel zur Homogenisierung eingesetzt werden kann, und schließlich zur Saugseite der Verdichtereinheit 40 geleitet.

Das kombinierte Reaktionsgemisch 5 wird beispielsweise in der ersten, zweiten und dritten Stufe eines elektrisch angetriebenen Zentrifugalverdichters, der die Verdichtereinheit 40 bildet, auf bis zu ca. 140 bar verdichtet. Das Verhältnis von Wasserstoff zu Stickstoff in dem der Verdichtereinheit 40 zugeführten Reaktionsgemisch 5 wird genau geregelt, um einen stabilen Betrieb der Verdichtereinheit 40 und der Ammoniaksynthese, d.h. der Umsetzung 30, zu erreichen. Das Verhältnis kann kontinuierlich durch eine Dichtemessung am Einlass der Verdichtereinheit 40 kontrolliert werden. Die vierte Verdichterstufe verdichtet auf 150 bar. Sie dient der Verdichtung von Reaktionsgemisch 5 und ggf. eines rezykliertem Reaktionsgemischs 7 aus dem Synthesekreislauf der Umsetzung 30. Hier verdichtetes Reaktionsgemisch kann in einem nicht veranschaulichten Wärmetauscher auf 170 °C vorgewärmt werden, bevor es zur Umsetzung 30 geleitet wird.

In Zeiten geringer Stromverfügbarkeit, in denen keine oder nur geringe Mengen Wasserstoff 3 produziert werden, d.h. in dem zweiten Verfahrensmodus gemäß Figur 2, wird zuvor zwischengespeichertes Reaktionsgemisch 5 ("erster Anteil" siehe oben und sogleich) aus der Speichereinheit 20 zum Einlass der Verdichtereinheit 40 geleitet. Die Speichereinheit 20 kann beispielsweise in einem Druckfenster von 30 bis 140 bar betrieben werden.

In Zeiten mit hoher Stromverfügbarkeit, wenn die Wasserstoffproduktion über dem Mindestbedarf liegt, d.h. in dem ersten Verfahrensmodus gemäß Figur 1, wird die Speichereinheit 20 mit dem überschüssig produzierten Wasserstoff (und Stickstoff), d.h. Reaktionsgemisch 5, gefüllt. Das Reaktionsgemisch 5 ("erster Anteil" des Reaktionsgemischs 5) wird beispielsweise nach der dritten Stufe des die Verdichtereinheit 40 bildenden vierstufigen Zentrifugalverdichters abgesaugt und über einen nicht veranschaulichten Nachkühler in die Speichereinheit 20 geleitet.

## Patentansprüche

1. Verfahren (100) zur Herstellung eines Syntheseprodukts (6), bei dem gasförmiger Wasserstoff (3) durch Elektrolyse (10) von Wasser (1) bereitgestellt und mit einem oder mehreren gasförmigen Reaktionspartnern (4) einer Umsetzung (30) zu dem Syntheseprodukt (6) unterworfen wird, wobei während eines ersten Verfahrensmodus der Wasserstoff (3) und der eine oder die mehreren Reaktionspartner (4) unter Erhalt eines Reaktionsgemischs (5) vermischt werden und das Reaktionsgemisch (5) oder ein Teil hiervon in einer Speichereinheit (20) druckgespeichert wird, und wobei während eines zweiten Verfahrensmodus das in dem ersten Verfahrensmodus druckgespeicherte Reaktionsgemisch (5) oder ein Teil hiervon aus der Speichereinheit (20) entnommen und der Umsetzung (30) zu dem Syntheseprodukt (6) zugeführt wird.

2. Verfahren (100) nach Anspruch 1, bei dem in einem dritten Verfahrensmodus der gasförmige Wasserstoff (3) durch die Elektrolyse (10) von Wasser (1) bereitgestellt und mit dem einen oder den mehreren gasförmigen Reaktionspartnern (4) einer Umsetzung (30) zu dem Syntheseprodukt (6) unterworfen wird, wobei der Wasserstoff (3) und der eine oder die mehreren Reaktionspartner (4) unter Erhalt des Reaktionsgemischs (5) vermischt werden und das Reaktionsgemisch (5) oder ein Teil hiervon unter Umgehung der Speichereinheit (20) der Umsetzung (30) zu dem Syntheseprodukt (6) zugeführt wird.

3. Verfahren (100) nach Anspruch 1 oder 2, bei dem in dem ersten Verfahrensmodus das Reaktionsgemisch (5) oder dessen druckgespeicherter Teil vor der Druckspeicherung auf ein Speicherdruckniveau verdichtet wird, und bei dem in dem zweiten Verfahrensmodus das in dem ersten Verfahrensmodus druckgespeicherte Reaktionsgemisch (5) oder dessen der Umsetzung (30) zu dem Syntheseprodukt (6) zugeführter Teil auf dem Speicherdruckniveau der Speichereinheit (20) entnommen und vor der Umsetzung (30) zu dem Syntheseprodukt (6) auf ein Umsetzungsdruckniveau verdichtet wird.

4. Verfahren (100) nach Anspruch 3, bei dem die Verdichtung auf das Speicherdruckniveau und das Umsetzungsdruckniveau unter Verwendung einer mehrstufigen Verdichtereinheit (40) vorgenommen wird.

5. Verfahren (100) nach Anspruch 4, bei dem in dem ersten Verfahrensmodus das Reaktionsgemisch (5) der Verdichtereinheit (40) saugseitig zugeführt wird, der über eine Zwischenentnahme ein Teil des Reaktionsgemischs (5) auf dem Speicherdruckniveau zur Einleitung in die Speichereinheit (20) entnommen wird, und bei dem in dem zweiten Verfahrensmodus das in dem ersten Verfahrensmodus druckgespeicherte Reaktionsgemisch (5) oder dessen der Umsetzung (30) zu dem Syntheseprodukt (6) zugeführter Teil der Verdichtereinheit (40) saugseitig zugeführt und druckseitig auf dem Umsetzungsdruckniveau entnommen wird.

6. Verfahren (100) nach Anspruch 4 oder 5, bei dem das Speicherdruckniveau bei 30 bis 210 bar, und das Umsetzungsdruckniveau bei 100 bis 250 bar liegt.

7. Verfahren (100) nach Anspruch 5, bei dem ein Rückführstrom (7) mit nicht umgesetztem Reaktionsgemisch (5) von der Umsetzung (30) der Verdichtereinheit (40) über eine Zwischeneinspeisung wieder zugeführt wird.

8. Verfahren (100) nach einem der Ansprüche 4 bis 7, bei dem die Verdichtereinheit (40) einen Axial- und/oder einen Radialturboverdichter und/oder einen Kolbenverdichter umfasst.

9. Verfahren nach einem der vorstehenden Ansprüche, bei dem die Vermischung zu dem Reaktionsgemisch (5) unter Verwendung einer Mischtrommel oder unter Verwendung eines statischen Mischers vorgenommen wird und/oder unter Verwendung einer saugseitig der Verdichtereinheit (40) angeordneten Dichtemesseinheit überwacht wird.

10. Verfahren (100) nach einem der vorstehenden Ansprüche, bei dem die Elektrolyse (10) unter Verwendung von regenerativ erzeugtem elektrischem Strom (2) durchgeführt wird.

11. Verfahren (100) nach einem der vorstehenden Ansprüche, bei dem der erste Betriebsmodus während eines Zeitraums höherer Stromverfügbarkeit durchgeführt wird und bei dem der zweite Betriebsmodus während eines Zeitraums geringerer Stromverfügbarkeit durchgeführt wird.

12. Verfahren (100) nach einem der vorstehenden Ansprüche, bei dem das Syntheseprodukt (6) Ammoniak und der Reaktionspartner Stickstoff ist.

13. Verfahren (100) nach einem der Ansprüche 1 bis 10, bei dem das Syntheseprodukt (6) synthetisches Methan oder Methanol ist und der Reaktionspartner Kohlenmonoxid und/oder Kohlendioxid ist.

14. Anlage zur Herstellung eines Syntheseprodukts (6), die dafür eingerichtet ist, gasförmigen Wasserstoff (3) durch Elektrolyse (10) von Wasser (1) bereitzustellen und mit einem oder mehreren gasförmigen Reaktionspartnern (4) einer Umsetzung (30) zu dem Syntheseprodukt (6) zu unterwerfen, wobei die Anlage ferner dazu eingerichtet ist, während eines ersten Verfahrensmodus den Wasserstoff (3) und den einen oder die mehreren Reaktionspartner (4) unter Erhalt eines Reaktionsgemischs (5) zu vermischen und das Reaktionsgemisch (5) oder ein Teil hiervon in einer Speichereinheit (20) druckzuspeichern, und während eines zweiten Verfahrensmodus das in dem ersten Verfahrensmodus druckgespeicherte Reaktionsgemisch (5) oder einen Teil hiervon aus der Speichereinheit (20) zu entnehmen und der Umsetzung (30) zu dem Syntheseprodukt (6) zuzuführen.

15. Anlage nach Anspruch 14, die zur Durchführung eines Verfahrens nach einem der Ansprüche 1 bis 13 eingerichtet ist.
